# EUROPÄISCHE PATENTSCHRIFT

(11) **EP 0 485 402 B1**
(45) Veröffentlichungstag und Bekanntmachung des Hinweises auf die Patenterteilung: **20.04.1994**
(21) Anmeldenummer: 90910633.8
(22) Anmeldetag: 25.07.1990
(51) Int. Cl.: B65G 45/02

(54) **MOBILES SCHMIERGERÄT FÜR ROHRBAHNEN**
MOBILE LUBRICATING APPLIANCE FOR TUBULAR TRACK
APPAREIL DE GRAISSAGE MOBILE POUR CIRCUITS A GLISSIERE TUBULAIRE

(30) Priorität: 03.08.1989 DE 3925653
(43) Veröffentlichungstag der Anmeldung: 20.05.1992
(73) Patentinhaber: Henkel Kommanditgesellschaft auf Aktien, 40191 Düsseldorf (DE)
(72) Erfinder: TINNEFELD, Bernd, D-4030 Ratingen (DE); GÖRKE, Heinz, D-4730 Aalen (DE)
(86) Internationale Anmeldenummer: EP9001213
(87) Internationale Veröffentlichungsnummer: WO9101931

(56) Entgegenhaltungen:
- FR-A- 2 344 476
- GB-A- 928 248

## Beschreibung

Solche Rohrbahnen finden sich als Transportsystem z.B. in Schlachtereien und der fleischverarbeitenden Industrie. Unter Rohrbahnen sind hier Schienen-, Träger- oder Rohrsysteme zu verstehen, an denen das Transportgut, z.B. Fleisch an Gleithaken hängend transportiert wird. Eine Schmierung dieser Gleitbahnen ist notwendig, um die manuelle oder maschinelle Bewegung der schweren Gehänge, auch über lange Strecken, zu erleichtern. Die Schmierung sollte schnell erfolgen und auch während des laufenden Betriebs möglich sein.

Diese Aufgabe wird erfindungsgemäß bei einem mobilen Schmiergerät für Rohrbahnen durch die folgenden Merkmale gelöst:
Es sind eine Auflagerung, die das Halten und Führen des Schmiergeräts mittels einer Rohrbahn während des Schmiervorgangs ermöglicht und die mindestens zwei um eine etwa vertikale Achse und unabhängig voneinander drehbare Lager für Rollen aufweist, eine unterhalb der Auflagerung angeordnete Halterung für einen Schmierstoff-Vorratsbehälter und eine von der Halterung zur Auflagerung führende Schmierstoffleitung mit einer Düse an derem Ende vorgesehen.

Das Schmiergerät kann also während des Schmiervorgangs über das Transportsystem hin- und hergeschoben werden. Vor und nach dem Schmieren kann das Schmiergerät ebenfalls über das schon vorhandene Transportsystem bewegt werden. Durch die oben genannten Lager kann das Gerät auch enge Kurven fahren. Da die Halterung unterhalb der Auflagerung vorgesehen ist, kann das Schmiergerät auch zum Schmieren von dicht unterhalb der Decke angeordneten Transportbahnen eingesetzt werden.

Vorteilhaft ist weiterhin ein Rückschlagventil an dem unteren Ende der Schmierstoffleitung. Dadurch wird verhindert, daß bei einem Wechsel des Schmierstoff-Vorratsbehälters der in der Schmierstoff-Leitung noch befindliche restliche Schmierstoff ausfließt.

Weiterhin ist es vorteilhaft, wenn die Halterung für eine Schmierstoff enthaltende Kartusche ausgelegt ist, die durch Hineinschieben des Kartuschenbodens in den Kartuschenmantel entleerbar ist, und wenn ein von einem Antrieb axial bewegbarer kegelstumpfförmiger Kolben mit dem spitzeren Ende zum Hineinschieben des Kartuschenbodens vorgesehen ist. Zum einen wird bei dieser Anordnung der Schmierstoff kontinuierlich der Düse zugeführt. Zum anderen bewirkt die Kegelstumpfform des Kolbens, daß er den Kartuschenboden gegen die Innenseite des Kartuschenmantels drückt und damit der Zwischenraum zwischen Kartuschenboden und Kartuschenmantel wie mit einer Dichtung abgedichtet ist, so daß auch bei höheren, auf den Kartuschenboden wirkenden Drücken kein Schmierstoff zwischen der Innenseite des Kartuschemantels und dem Kartuschenboden austreten kann.

In diesem Fall ist eine besonders gute Abdichtung dadurch zu erreichen, daß der Kolben aus einem leicht verformbaren Material, insbesondere Kunststoff besteht. Der Kolben paßt sich dann nämlich besonders gut an die Form des Kartuschenbodens an. Auch ist die Herstellung eines solchen Kolbens preiswerter als die eines Metallkolbens.

Um bei einem Rückfahren des Kolbens nach dem Entleeren der Kartusche den Kartuschenboden infolge des Saugeffektes nicht wieder zurückzuziehen, wird vorgeschlagen, daß eine beide ebenen Flächen des kegelstumpfförmigen Kolbens verbindende Bohrung vorgesehen wird. Diese Bohrung sorgt für den Druckausgleich.

Um mit dem Schmiergerät auch bei Umgebungstemperaturen, insbesondere bei der relativ niedrigen Umgebungstemperatur der fleischverarbeitenden Industrie, festen Schmierstoff auftragen zu können, werden an eine Regelung angeschlossene Heizelemente zum Beheizen des Schmierstoff-Vorratsbehälters, der Schmierstoff-Leitung und der Düse vorgeschlagen. Ein besonderer Vorteil dieser Ausgestaltung liegt darin, daß der aus der Düse austretende heiße Schmierstoff durch die relativ kalte Rohrbahn sofort abgekühlt wird und daher auf dieser fest haftet. Es läßt sich daher ein gut haftender, harter Schmierstoff-Film auf der Rohrbahn erreichen.

Um zum einen bei der Beheizung eine ausreichend hohe Temperatur des Schmierstoffs zu erreichen, so daß er auf der Rohrbahn gut haftet, und zum anderen den Schmierstoff nicht zu hoch zu erhitzen, so daß er sich chemisch verändert, wird vorgeschlagen, daß die Regelung zum Regeln der Temperatur mit einer Regelabweichung von höchstens 5 °C und insbesonders zum Regeln auf 60 - 70 °C ausgelegt ist. Dieser letztere Temperaturbereich hat sich als besonders günstig bewährt.

Um während des Schmierens von Energieversorgungskabeln unabhängig zu sein, wird ein als Energieversorgung dienender Akkumulator vorgeschlagen, sowie ein Fahrtisch, mit dem der Akkumulator transportierbar ist, und ein Stromversorgungskabel zwischen Akkumulator und dem an die Rohrbahn hängbaren Teil des Schmiergerätes.

Ein schneller Wechsel der Schmierstoff-Kartusche wird durch eine Befestigungsplatte mit einer zentralen Sackbohrung ermöglicht, die ein an das Gewinde der Kartusche angepaßtes Innengewinde aufweist und mit ihrem toten Ende an einen Kanal innerhalb der Befestigungsplatte angeschlossen ist. Durch diese Maßnahmen wird die Kartusche gleichzeitig gehaltert und an die Schmierstoffleitung angeschlossen. Bei einem Wechsel der Kartusche ist es nur notwendig, die Befestigungsplatte mit der daran hängenden leeren Kartusche aus dem Schmierstoffgerät zu entnehmen, die leere Kartusche abzuschrauben, eine neue Kartusche einzuschrauben, und die Befestigungsplatte mit der nun gefüllten Kartusche wieder an das Schmierstoffgerät zu befestigen. Die Befestigung der Befestigungsplatte selbst kann vorteilhaft durch Schrauben geschehen.

Eine preiswerte, gut austauschbare Düse wird dadurch erhalten, daß die Düse als ein längs gebohrter, in das Ende der Schmierstoff-Leitung einschraubbarer Gewindestift ausgebildet ist.

Eine einstellbare, genau kontrollierbare Dosierung des Schmierstoffes wird durch einen von einer Einachs-Positioniersteuerung gesteuerten, den Kolben betätigenden Hubzylinder erreicht.

Mit dem erfindungsgemäßen Schmiergerät lassen sich die Rohre an der Rohroberseite der Rohrbahn bei einer Umgebungstemperatur weit unter 0 °C durch manuelles Fortbewegen des Gerätes mit dem erhitzten Schmierstoff gleichmäßig schmieren. Der Schmierstoff wird schnell aufgebracht und die genau benötigte Menge kann dosiert werden. Nach dem Auftragen liegt der Schmierstoff wegen des großen Unterschiedes zwischen der Beheizungstemperatur und der Temperatur der Rohrbahn als glatter, gut haftender und nicht tropfender Film vor, so daß bei allen Transportarbeiten, insbesondere in der fleischverarbeitenden Industrie die Fleischqualität unbeeinträchtigt bleibt.

Zum Stand der Technik wird die DE-OS 36 32 948 genannt.

Nachstehend wird eine spezielle Ausführungsform der Erfindung anhand der Zeichnungen näher erläutert. Es zeigen:
- Figur 1:: eine Ausführung des erfindungsgemäßen Schmiergeräts in einer seitlichen Ansicht,
- Figur 2:: einen Schnitt durch eine Rohrbahn,
- Figur 3:: eine Vergrößerung des in Figur 1 dargestellten oberen Teils,
- Figur 4:: eine Ansicht des oberen Teils von Figur 1 in Richtung des Pfeils IV,
- Figur 5:: eine Ansicht des unteren Teils von Figur 1 in Richtung des Pfeils V, wobei die Kartuschenhalterung und die damit verbundenen Teile im Schnitt dargestellt sind,
- Figur 6:: eine Vergrößerung des oberen Teils von Figur 5,
- Figur 7:: eine Vergrößerung des mittleren Teils von Figur 1,
- Figur 8:: eine Aufsicht von oben auf das Schmiergerät,
- Figur 9:: einen Schnitt durch den Kolben, den Hubzylinder und das Kartuschenende und
- Figur 10:: eine Aufsicht auf den Kolben.

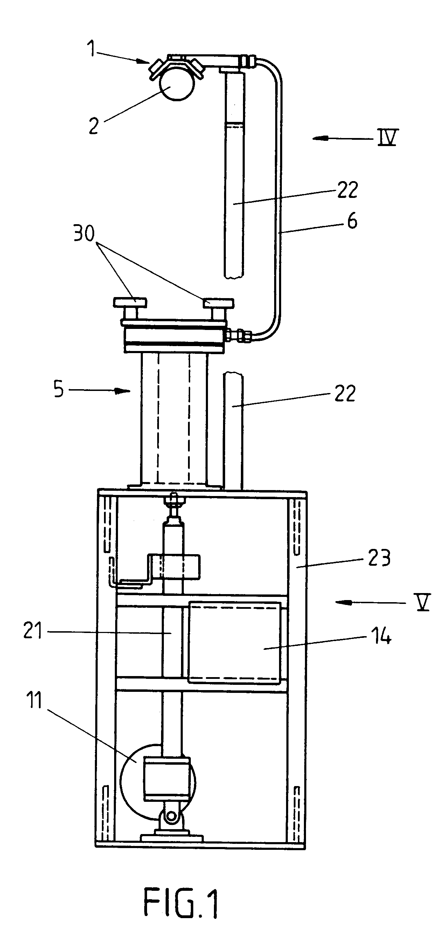

Figur 1 zeigt eine Ansicht eines erfindungsgemäßen Schmiergerätes. Es besteht hauptsächlich aus drei Einheiten. Die erste Einheit befindet sich räumlich oben und ist aus der Auflagerung (1), die auf der Rohrbahn (2) ruht, der mit der Auflagerung (1) verbundenen Strebenkonstruktion (22) und der Schmierstoff-Leitung (6) zusammengesetzt. In mittlerer Höhe des Schmiergerätes befindet sich die Halterung (5) für den Schmierstoff-Vorratsbehälter, der an die Schmierstoff-Leitung (6) angeschlossen ist. Dieser Halterungsteil ist an einem Gestell (23) befestigt. In diesem Gestell sind im wesentlichen der Antrieb (11) für den vom Hubzylinder (21) betätigten Kolben und die Regelung (14) eingebaut.

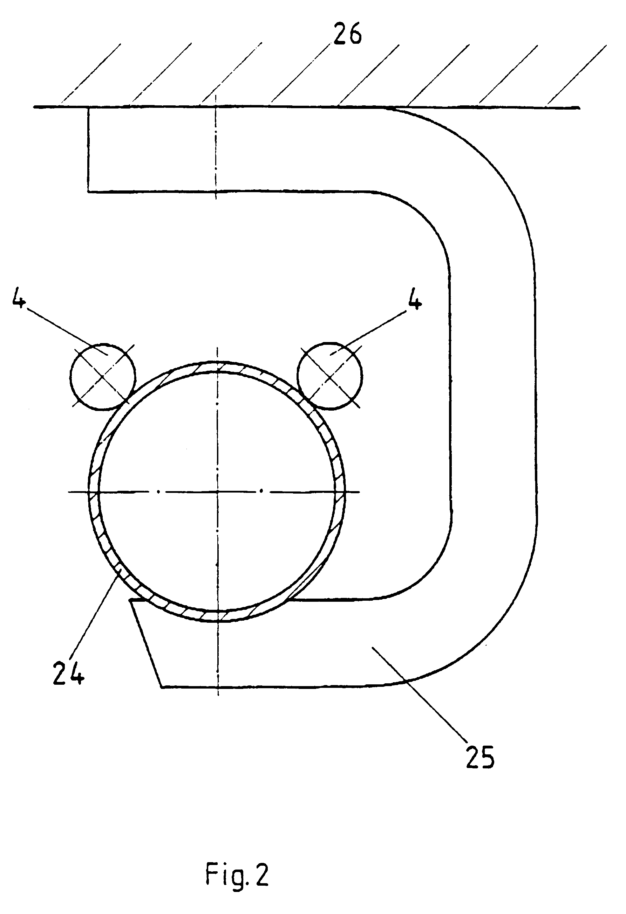

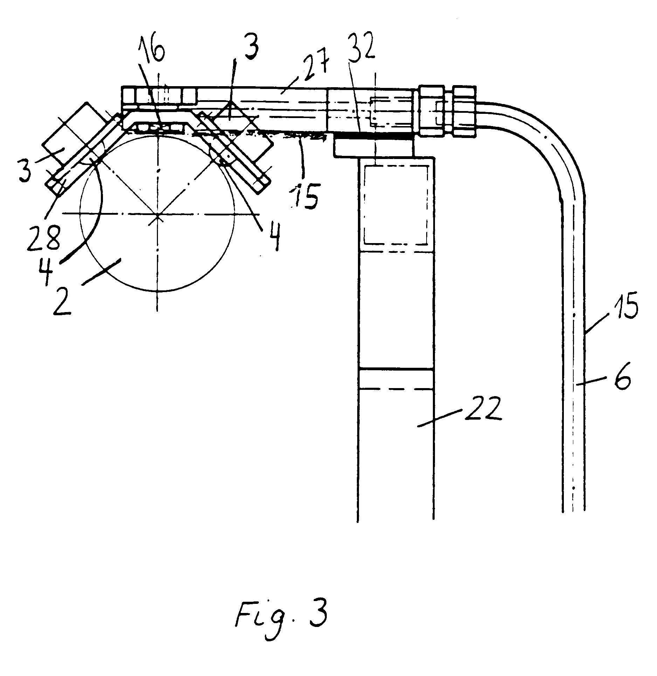

Das Auflagerungsproblem des Schmiergerätes wird besonders deutlich aus Figur 2. Ein Rohr (24) einer Rohrbahn ist mittels mehrerer L-Stücke (25) an der Decke (26) befestigt. Das Rohr (24) hat gemäß Figur 3 nur einen sehr geringen Abstand von der Decke (26) sowie vom L-Stück (25). Dieser Umstand ist wie nachfolgend beschrieben berücksichtigt worden. In Figur 2 sind zusätzlich und schematisch die Rollen (4) der Auflagerung (1) eingezeichnet. Typischerweise betragen die Abstände des Rohrs (24) zur Decke und zum L-Stück nur etwa 25 mm.

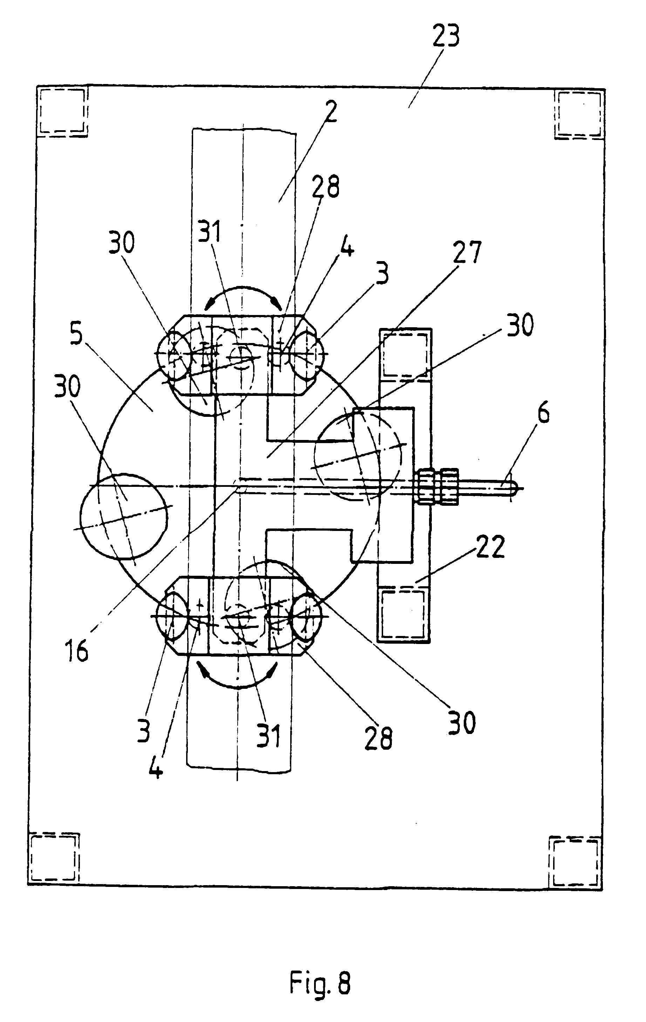

In Figur 3 ist eine Vergrößerung des oberen Teils von Figur 1 dargestellt. Am waagerechten Arm (27), der an seiner Unterseite ein flaches Heizelement (15) trägt, ist ein nach unten gebogener Bügel (28) befestigt. Der Bügel (28) hält vier drehbare Lager (3) für Rollen (4), von denen nur zwei in Figur 3 erkennbar sind. Die Anordnung wird besonders deutlich aus Figur 8. Beim Bezugszeichen 29 in Figur 8 sind die Durchtrittsöffnungen für die Rollen (4) schematisch angedeutet. Zusätzlich finden sich noch in Figur 8 die vier Sternschrauben (30). Die Bügel (28) sind um die jeweilige Achse (31) drehbar gelagert. So kann sich die Auflagerung allen Kurven und Windungen der Rohrbahn anpassen.

Zu der in Figur 3 dargestellten Auflagerung (1) führt eine Schmierstoffleitung (6), die mantelbeheizt ist. Am Ende dieser Schmierstoffleitung ist eine Düse (16) angebracht.

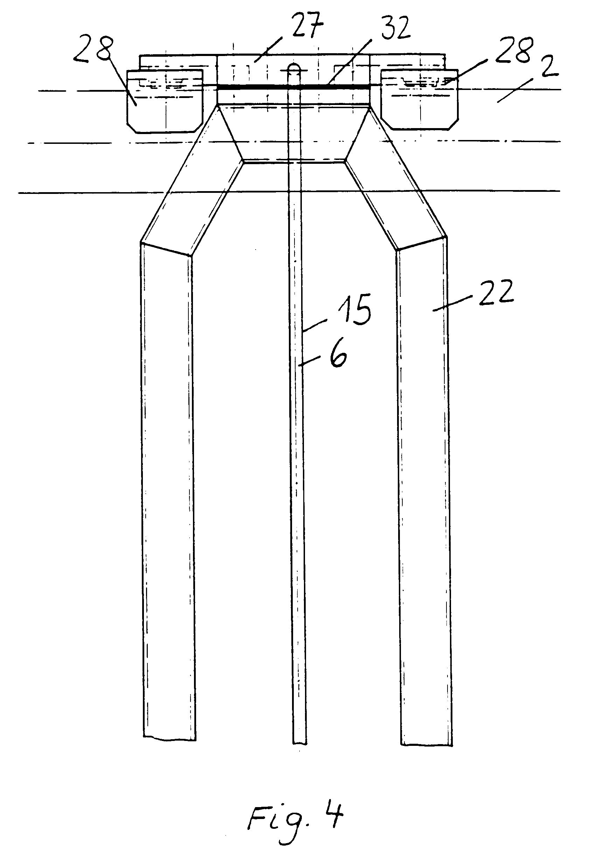

Figur 4 zeigt den oberen Teil des Schmiergerätes, insbesondere also die Auflagerung in einer Ansicht in Richtung des Pfeiles IV von Figur 1. Auch hier, wie in allen Figuren, werden für gleiche Teile gleiche Bezugszeichen verwendet. In Figur 3 wie auch in Figur 4 ist zusätzlich eine Wärmeisolierung (32) eingezeichnet.

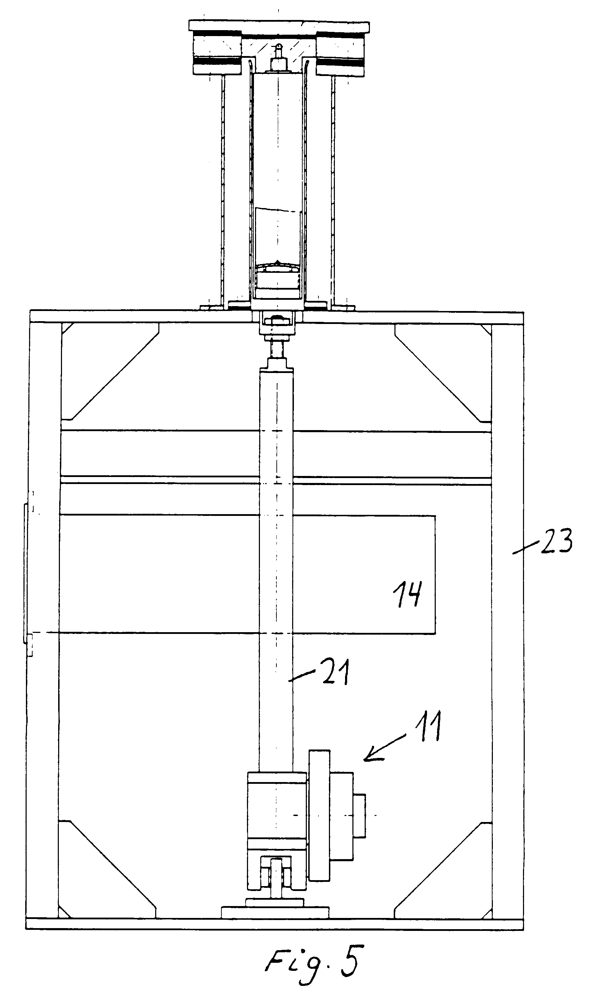

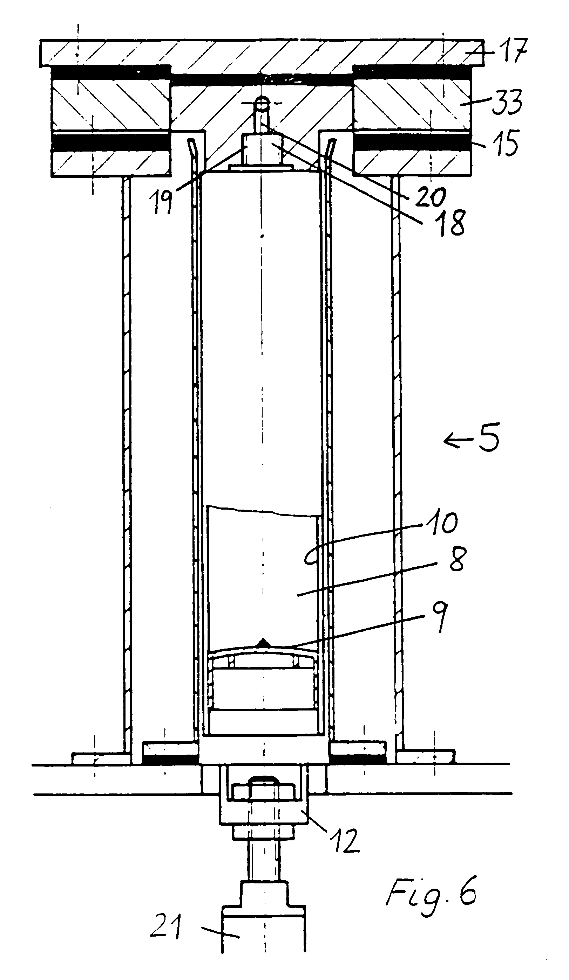

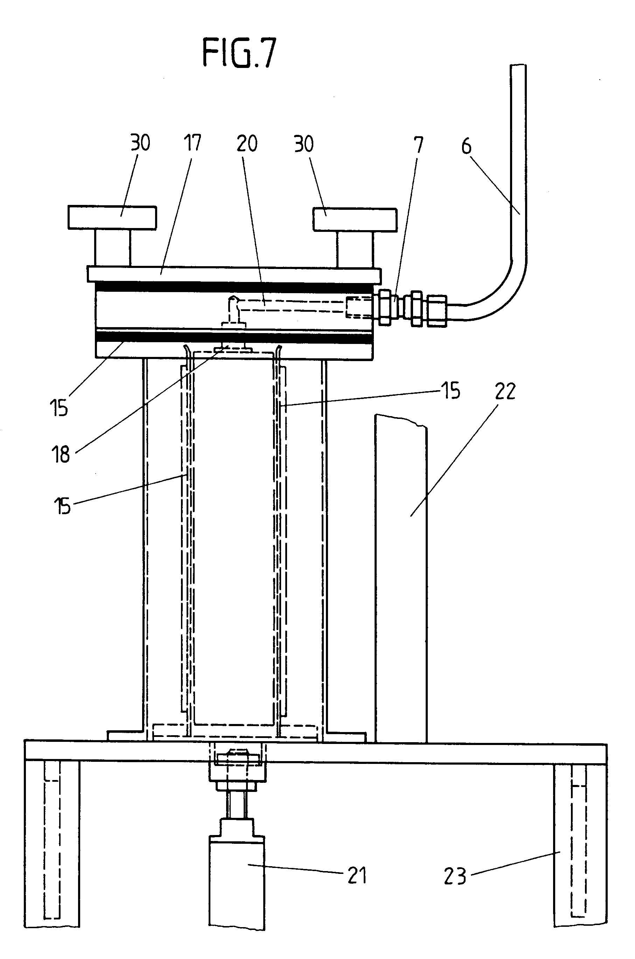

Figur 5 zeigt eine Seitenansicht des mittleren und unteren Teils des Schmiergerätes in Richtung des Pfeiles V in Figur 1. Der obere Teil dieser Zeichnung ist in Figur 6 vergrößert dargestellt. Die Halterung (5) wird oben von einer Befestigungsplatte (17) abgedeckt. Die Befestigungsplatte (17) liegt auf einem Ring (33) auf und ist von dieser durch eine Wärmeisolierung (34) getrennt, die auch innerhalb der Befestigungsplatte (17) verläuft. Die Befestigungsplatte (17) weist einen nach unten gerichteten zylindrischen Vorsprung auf, in den eine Sackbohrung (18) mit einem Innengewinde (19) eingearbeitet ist, wobei diese Sackbohrung (18) in einen Kanal (20) mündet. Der Kanal (20) verbindet, wie in Figur 7 besonders deutlich sichtbar, die Sackbohrung (18) mit der Schmierstoffleitung (6). Zwischen dem Ausgang des Kanals (20) und der Schmierstoffleitung (6) ist noch ein Rückschlagventil (7) angeordnet. Der obere Teil der Halterung (5) wird über flächige Heizelemente (15) beheizt.

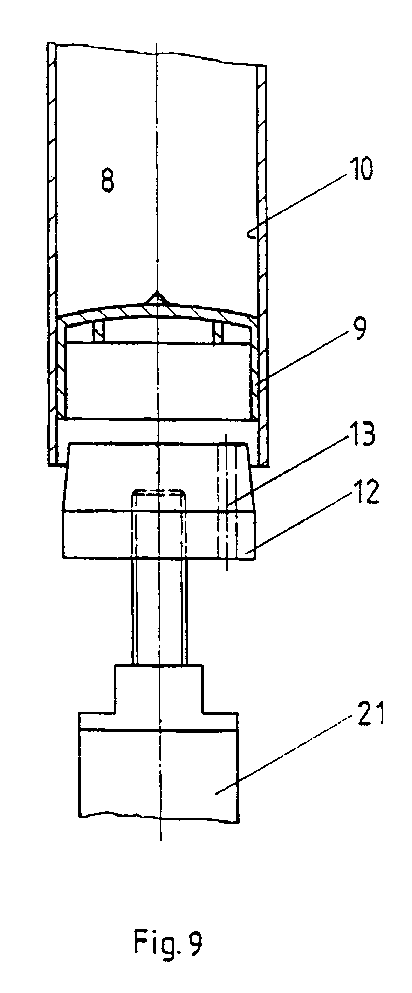

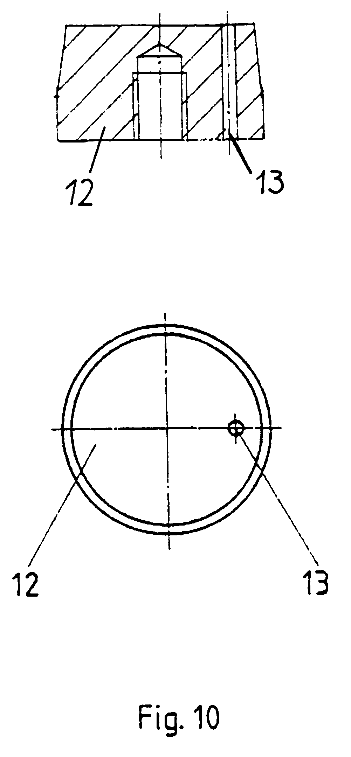

In Figur 6 ist ferner eine Kartusche (8) mit einem Kartuschenmantel (10) und einem Kartuschenboden (9) eingezeichnet. Auf den Kartuschenboden (9) drückt ein Kolben (12), der in Figur 6 nur schematisch und in Figur 9 und 10 genauer dargestellt ist.

Das Rückschlagventil (7) in Figur 7 ist auf einen Überdruck von 1 bar ausgelegt. Der Abstand zwischen der Befestigungsplatte (17) und der Auflagerung (1) beträgt etwa einen halben Meter. Auch die Kartusche selbst wird mit flächigen Heizelementen (15) beheizt.

Die Figuren 9 und 10 zeigen Details des Kolbens (12). Der Kolben (12) hat die Form eines Kegelstumpfes mit dem spitzeren Ende in Richtung des Kartuschenbodens (9). Zum Ausgleich des Luftdrucks ist der aus Kunststoff bestehende Kolben (12) mit einer Bohrung (13) versehen, die parallel zur Längsachse, aber seitlich versetzt dazu verläuft.

Mit diesem Schmiergerät können mit Fett gefüllte Kartuschen im erwärmten Zustand ausgedrückt und dieses Fett durch ein Leitungssystem mittels einer Düse auf Rohrleitungen aufgetragen werden. Dazu werden Aluminiumkartuschen mit einem Inhalt von 0,3 Liter in das Gewinde (19) der Befestigungsplatte (17) geschraubt. Die Befestigungsplatte (17), das Steigrohr (6), sowie die Düsenhalterung werden durch flexible Silikon-Heizungen auf 60 bis 70 °C aufgeheizt. Die Temperaturüberwachung nimmt eine Regeleinheit (14) mit vier Meßstellen vor. Die Düse (16) ist derart angeordnet, daß sie sich im Betrieb 2 mm über der Rohrbahn befindet. Im Ausführungsbeispiel sind die Bügel (28) um 90 ° schwenkbar, so daß auch sehr enge Rohrbahn-Kurven gefahren werden können.

Mit diesem Rohrbahn-Schmiergerät lassen sich 0,3 Liter, also der gesamte Inhalt einer Kartusche in etwa 6 Minuten gleichmäßig auf die Rohrbahn auftragen.

### Bezugszeichenliste

- 1: Auflagerung
- 2: Rohrbahn
- 3: Lager
- 4: Rollen
- 5: Halterung
- 6: Schmierstoff-Leitung
- 7: Rückschlagventil
- 8: Kartusche
- 9: Kartuschenboden
- 10: Kartuschenmantel
- 11: Antrieb
- 12: Kolben
- 13: Bohrung
- 14: Regelung
- 15: Heizelemente
- 16: Düse
- 17: Befestigungsplatte
- 18: Sackbohrung
- 19: Innengewinde
- 20: Kanal
- 21: Hubzylinder
- 22: Strebenkonstruktion
- 23: Gestell
- 24: Rohr
- 25: L-Stück
- 26: Decke
- 27: Arm
- 28: Bügel
- 30: Sternschrauben
- 31: Achse
- 32: Wärmeisolierung
- 33: Ring
- 34: Wärmeisolierung

## Patentansprüche

1. Mobiles Schmiergerät für Rohrbahnen,
gekennzeichnet durch
eine Auflagerung (1), die das Halten und Führen des Schmiergeräts mittels einer Rohrbahn (2) während des Schmiervorgangs ermöglicht und die mindestens zwei um eine etwa vertikale Achse und unabhängig voneinander drehbare Lager (3) für Rollen (4) aufweist, eine unterhalb der Auflagerung (1) angeordnete Halterung (5) für einen Schmierstoff-Vorratsbehälter und eine von der Halterung (5) zur Auflagerung (1) führende Schmierstoff-Leitung (6) mit einer Düse (16) an derem Ende.

2. Schmiergerät nach Anspruch 1,
gekennzeichnet durch
ein Rückschlagventil (7) an dem unteren Ende der Schmierstoff-Leitung (6).

3. Schmiergerät nach Anspruch 1 oder 2,
dadurch gekennzeichnet,
daß die Halterung (5) für eine Schmierstoff enthaltende Kartusche (8) ausgelegt ist, die durch Hineinschieben des Kartuschenbodens (9) in den Kartuschenmantel (10) entleerbar ist, daß ein von einem Antrieb (11) axial bewegbarer kegelstumpfförmiger Kolben (12) mit dem spitzeren Ende zum Hineinschieben des Kartuschenbodens (9) vorgesehen ist.

4. Schmiergerät nach Anspruch 3,
dadurch gekennzeichnet,
daß der Kolben (12) aus einem leicht verformbaren Material, insbesondere Kunststoff besteht.

5. Schmiergerät nach Anspruch 3 oder 4,
gekennzeichnet durch
eine beide ebenen Flächen des kegelstumpfförmigen Kolbens (12) verbindende Bohrung (13).

6. Schmiergerät nach einem der Ansprüche 1 bis 5,
gekennzeichnet durch
an eine Regelung (14) angeschlossene Heizelemente (15) zum Beheizen des Schmierstoff-Vorratsbehälters, der Schmierstoff-Leitung (6) und der Düse (16).

7. Schmiergerät nach Anspruch 6,
dadurch gekennzeichnet,
daß die Regelung (14) zum Regeln der Temperatur mit einer Regelabweichung von höchstens 5 °C und insbesonders zum Regeln auf 60 bis 70 °C ausgelegt ist.

8. Schmiergerät nach einem der Ansprüche 1 bis 7,
gekennzeichnet durch
einen als Energieversorgung dienenden Akkumulator, einen Fahrtisch, mit dem der Akkumulator transportierbar ist, und ein Stromversorgungskabel zwischen Akkumulator und dem an die Rohrbahn (2) hängbaren Teil des Schmiergerätes.

9. Schmiergerät nach einem der Ansprüche 3 bis 8,
gekennzeichnet durch
eine Befestigungsplatte (17) mit einer zentralen Sackbohrung (18), die ein an das Gewinde der Kartusche (8) angepaßtes Innengewinde (19) aufweist und mit ihrem toten Ende an einen Kanal (20) innerhalb der Befestigungsplatte (17) angeschlossen ist.

10. Schmiergerät nach einem der Ansprüche 1 bis 9,
dadurch gekennzeichnet,
daß die Düse (16) als ein längs gebohrter, in das Ende der Schmierstoff-Leitung (6) einschraubbarer Gewindestift ausgebildet ist.

11. Schmiergerät nach einem der Ansprüche 3 bis 10,
gekennzeichnet durch
einen von einer Einachs-Positioniersteuerung gesteuerten, den Kolben (12) betätigenden Hubzylinder (21).

## Claims

1. Mobile lubricating appliance for tubular tracks, characterised by a bearing mount (1), which enables the retention and guidance of the lubricating appliance by means of a tubular track (2) during the lubrication process and which displays at least two bearings (3), which are rotatable about an approximately vertical axis and one independently of the other, for rollers (4), a mounting (5), which is arranged underneath the bearing mount (1) and for a lubricant stock container, and a lubricant duct (6), which leads from the mounting (5) to the bearing mount (1), with a nozzle (16) at its end.

2. Lubricating appliance according to claim 1, characterised by a non-return valve (7) at the lower end of the lubricant duct (6).

3. Lubricating appliance according to claim 1 or 2, characterised thereby, that the mounting (5) is designed for a cartridge (8), which contains lubricant and is emptiable by pushing the cartridge base (9) into the cartridge casing (10), and that a frusto-conical piston (12), which is movable axially by a drive (11), with the narrower end for pushing-in of the cartridge base (9) is provided.

4. Lubricating appliance according to claim 3, characterised thereby, that the piston (12) consists of an easily deformable material, in particular synthetic material.

5. Lubricating appliance according to claim 3 or 4, characterised by a bore (13) connecting both planar surfaces of the frusto-conical piston (12).

6. Lubricating appliance according to one of the claims 1 to 5, characterised by heating elements (15), which are connected to a regulator (14), for the heating of the lubricant stock container, the lubricant duct (6) and the nozzle (16).

7. Lubricating appliance according to claim 6, characterised thereby, that the regulator (14) is designed for regulating the temperature with a deviation of at most 5°C and in particular for the regulation to 60 to 70°C.

8. Lubricating appliance according to one of the claims 1 to 7, characterised by an accumulator serving an energy supply, a moving table, by which the accummulator is transportable and a current supply cable between the accummulator and that part of the lubricating appliance, which is suspendable from the tubular track (2).

9. Lubricating appliance according to one of the claims 3 to 8, characterised by a fastening plate (17) with a central blind bore (18), which displays an internal thread (19) matched to the thread of the cartridge (8) and is connected by its dead end to a channel (20) within the fastening plate (17).

10. Lubricating appliance according to one of the claims 1 to 9, characterised thereby, that the nozzle (16) is constructed as a longitudinally bored, threaded pin threadable into the end of the lubricant duct (6).

11. Lubricating appliance according to one of the claims 3 to 10, characterised by a lifting cylinder (21), which is controlled by a positioning control with one degree of freedom and actuates the piston (12).

## Revendications

1. Appareil de graissage mobile pour voies tubulaires, caractérisé par le fait qu'il comporte un support (1) permettant de le maintenir et de le guider au moyen d'une voie (2) tubulaire au cours de l'opération de graissage, ce support étant pourvu d'au moins deux coussinets (3) pour des rouleaux (4), lesquels coussinets sont mobiles, indépendamment l'un de l'autre, autour d'un axe à peu près vertical, cet appareil de graissage comportant en outre un dispositif de retenue (5) pour un réservoir à lubrifiant, placé au-dessous du support (1) et un conduit (6) de passage du lubrifiant allant de ce dispositif de retenue (5) au support (1) et pourvu d'une buse (16) à son extrémité.

2. Appareil de graissage selon la revendication 1, caractérisé par le fait qu'il comporte un clapet anti-retour (7) situé à l'extrémité inférieure du conduit (6) de passage du lubrifiant.

3. Appareil de graissage selon l'une ou l'autre des revendications 1 ou 2, caractérisé par le fait que le dispositif de retenue (5) est étudié pour une cartouche (8) contenant un lubrifiant et pouvant être vidée par enfoncement de son fond (9) dans son enveloppe (10), cet appareil de graissage comportant un piston (12) en forme de cône tronqué pouvant être mû axialement par une commande (11) et dont l'extrémité de sommet est adaptée pour enfoncer le fond (9) de cette cartouche.

4. Appareil de graissage selon la revendication 3, caractérisé par le fait que le piston (12) est constitué dans une matière légèrement déformable, en particulier une matière synthétique.

5. Appareil de graissage selon l'une ou l'autre des revendications 3 ou 4, caractérisé par le fait qu'un trou (13) est prévu pour relier les deux faces planes supérieure et inférieure du piston (12) en forme de cône tronqué.

6. Appareil de graissage selon l'une quelconque des revendications 1 à 5, caractérisé par qu'il comprend des éléments de chauffage (15) connectés à un dispositif de réglage (14) et servant à chauffer le réservoir à lubrifiant, le conduit (6) de passage du lubrifiant et la buse (16).

7. Appareil de graissage selon la revendication 6, caractérisé par le fait que le dispositif de réglage (14) est étudié pour que le réglage de la température se fasse avec une tolérance courante de 5°C maximum, en particulier, pour qu'il s'effectue à une température allant de 60°C à 70°C.

8. Appareil de graissage selon l'une quelconque des revendications 1 à 7, caractérisé par le fait qu'il comporte un accumulateur servant à l'alimentation en énergie, une table de transport grâce à laquelle l'accumulateur peut être transporté, et un câble d'alimentation en courant électrique entre l'accumulateur et la partie de cet appareil de graissage pouvant être accrochée à la voie (2) tubulaire.

9. Appareil de graissage selon l'une quelconque des revendications 3 à 8, caractérisé par le fait qu'il comporte une plaque de fixation (17) pourvue d'un trou borgne (18) central présentant un filet femelle (19) adapté au filetage de la cartouche (8), ce trou borgne étant raccordé par son extrémité de fond à un canal (20) interne à la plaque de fixation (17).

10. Appareil de graissage selon l'une quelconque des revendications 1 à 9, caractérisé par le fait que la buse (16) est constituée par un goujon fileté alésé dans le sens longitudinal et pouvant être vissé dans l'extrémité du conduit (6) de passage du lubrifiant.

11. Appareil de graissage selon l'une quelconque des revendications 3 à 10, caractérisé par le fait qu'il comporte un cylindre élévateur (21) actionnant le piston (12) et manoeuvré par une commande de positionnement à axe unique.
